# FASCICULE DE BREVET EUROPEEN

(11) **EP 2 971 371 B1**
(45) Date de publication et mention de la délivrance du brevet: **15.11.2017**
(21) Numéro de dépôt: 14713550.3
(22) Date de dépôt: 12.03.2014
(51) Int. Cl.: F16H 19/04, F16H 35/10, E02B 17/08

(54) **DISPOSITIF POUR LA MANOEUVRE EN TRANSLATION D'UNE STRUCTURE MOBILE PAR RAPPORT À UN SUPPORT FIXE**
VORRICHTUNG ZUR TRANSLATIONALEN MANÖVRIERUNG EINER IN BEZUG AUF EINEN FESTEN TRÄGER BEWEGLICHEN STRUKTUR
DEVICE FOR TRANSLATIONALLY MANOEUVRING A STRUCTURE THAT IS ABLE TO MOVE WITH RESPECT TO A FIXED SUPPORT

(30) Priorité: 15.03.2013 FR 1352311
(43) Date de publication de la demande: 20.01.2016
(73) Titulaire: NOV - BLM, 44470 Carquefou (FR)
(72) Inventeur: DESPREZ, François, F-44470 Thouare Sur Loire (FR)
(74) Mandataire: Jacobacci Coralis Harle
(86) Numéro de dépôt international: PCT/FR2014/050551
(87) Numéro de publication internationale: WO 2014/140473

(56) Documents cités:
- EP-A2- 0 052 065
- US-A- 2 434 480
- US-A- 3 435 932
- US-A1- 2003 032 519

## Description

### DOMAINE TECHNIQUE AUQUEL SE RAPPORTE L'INVENTION

La présente invention concerne un dispositif pour la manoeuvre d'une structure mobile en élévation ou en abaissement, par rapport à un support fixe ; cette invention intéresse en particulier le domaine des engins offshore, plateforme ou navire, du type auto-élévateur (désignés couramment par le terme anglais « jack-up »). Un tel dispositif est divulgué par exemple dans EP 0 052 065 A.

### ARRIÈRE-PLAN TECHNOLOGIQUE

Certains engins offshore du type auto-élévateur, dit « jack-up », comprennent :
- une coque, permettant à l'engin de se déplacer par flottaison et recevant la partie utile, et
- une pluralité de jambes mobiles, manoeuvrables en relèvement ou en abaissement le long de la coque, destinées à venir s'appuyer sur le sol.

De cette façon, ces engins offshore peuvent se déplacer par flottaison lorsque leurs jambes sont relevées, tout en ayant un appui sur le fond marin lorsque ces jambes sont abaissées.

Pour assurer leur manoeuvre en montée et en descente, ces jambes comportent classiquement des crémaillères coopérant avec des pignons entrainés par des moyens moteurs équipant la coque.

Cependant, aujourd'hui, un tel engin offshore auto-élévateur ne peut appuyer ses jambes contre le fond marin seulement en présence d'une petite houle, c'est-à-dire typiquement des vagues inférieures à 2 mètres de hauteur.

En effet, dans le cas d'une houle modérée à forte (typiquement avec des vagues dont la hauteur est, respectivement, supérieure à 2 mètres, ou supérieure à 4 mètres), les mouvements de roulis et de tangage de la coque en flottaison, combinés avec la rigidité des jambes, entraînent des surcharges dynamiques à chacune des percussions de ces dernières contre le fond marin.
Ces surcharges proviennent en particulier des moyens moteurs pour les pignons qui, de par leur inertie, ne sont pas capables d'absorber efficacement le mouvement des jambes imposé par la houle.

Ce phénomène constitue une sérieuse limitation à l'exploitation de ces engins auto-élévateurs, rencontrés par exemple pour la pose d'éoliennes et aussi dans le cadre de certains forages pétroliers.

Pour remédier à ces inconvénients, les pignons de certaines structures sont montés sur un châssis flottant et reliés à la coque par un dispositif élastique de type coussin élastomère.

Un tel dispositif élastique permet une réduction partielle de la surcharge dynamique.

Cependant, en pratique, cette compensation n'est pas suffisante.

Elle diminue également la rigidité et la stabilité de l'engin offshore en position relevée, ce qui va à l'encontre de l'objectif recherché, à savoir monter cet engin offshore sur des jambes posées au fond de la mer afin de l'immobiliser.

Il existe donc un besoin pour un dispositif de manoeuvre apte à dissiper et à absorber efficacement les efforts provenant de la percussion des jambes mobiles contre le fond marin.

Une telle structure serait en particulier intéressante pour permettre la manoeuvre des jambes d'un engin auto-élévateur dans des conditions de houles habituellement défavorables (à savoir une houle modérée, voire forte).

### OBJET DE L'INVENTION

Pour cela, en substance, l'invention concerne une approche originale dans laquelle des moyens limiteurs de couple sont ajoutés dans un train d'engrenage qui relie les moyens moteurs avec le ou les pignons de sortie.

En particulier, le dispositif selon l'invention, pour la manoeuvre en translation d'une structure mobile (avantageusement en élévation ou en abaissement) par rapport à un support fixe, comprend :
- au moins une crémaillère, solidaire de ladite structure mobile ou dudit support fixe, et
- au moins un pignon de sortie, solidaire respectivement dudit support fixe ou de ladite structure mobile, qui engrène avec ladite crémaillère, pour la manoeuvre en translation de ladite structure mobile selon un axe de translation (avantageusement vertical).
Le pignon de sortie est entraîné par des moyens moteurs, cela par l'intermédiaire d'un train d'engrenage porté par un châssis, lequel train d'engrenage comprend des éléments formant roues, pignons et/ou couronnes.

En outre, l'un au moins desdits éléments dudit train d'engrenage consiste en un élément asservi porté par un arbre équipé de moyens limiteurs de couple coopérant avec ledit châssis, lesquels moyens limiteurs de couple présentent un couple limite qui est déterminé de sorte :
- à immobiliser en rotation ledit élément asservi par rapport audit châssis lorsque son couple est inférieur audit couple limite, afin d'assurer la manoeuvre en translation de ladite structure mobile par l'entrainement en rotation dudit pignon de sortie, et
- à autoriser une rotation dudit élément asservi par rapport audit châssis lorsque son couple est supérieur audit couple limite, pour éviter l'application d'une surcharge statique ou dynamique sur ledit train d'engrenage.

Un tel dispositif de manoeuvre a l'intérêt de pouvoir dissiper et absorber efficacement les surcharges statiques et dynamiques survenant lors de la manoeuvre de la structure mobile à proximité du sol, combiné avec des mouvements générés par les conditions extérieures.

D'autres caractéristiques avantageuses, pouvant être prises en combinaison ou indépendamment les unes des autres, sont précisées ci-dessous :
- le couple limite des moyens limiteurs de couple est compris entre 0,1 et 3 fois l'effort nominal (correspondant avantageusement au poids du support fixe, le cas échéant le poids de la coque de l'engin offshore) ;
- les moyens limiteurs de couple comportent des moyens pour ajuster le couple limite au cours de la manoeuvre ;
- les moyens limiteurs de couple comportent des moyens pour leur pilotage dans une position inactive, dans laquelle l'élément asservi est immobilisé en rotation par rapport audit châssis ;
- les moyens limiteurs de couple consistent en un frein multi-disques ;
- les moyens limiteurs de couple sont associés à des moyens de refroidissement à l'eau ;
- le dispositif de manoeuvre comporte une crémaillère verticale associée à un pignon de sortie, et le train d'engrenage comporte deux groupements en parallèle dans lequel (i) un premier groupement, pour l'entrainement en rotation dudit pignon de sortie, est mené directement par les moyens moteurs, et (ii) un second groupement comporte ledit élément asservi associé auxdits moyens limiteurs de couple ;
- le dispositif comporte au moins deux pignons de sortie qui engrènent chacun avec une crémaillère et qui s'étendent selon des axes parallèles entre eux, lesquels pignons de sortie sont entraînés par des moyens moteurs, cela par l'intermédiaire du train d'engrenage.

Ces pignons de sortie s'étendent avantageusement selon des axes horizontaux et ils sont disposés soit dans le même plan horizontal ou sensiblement le même plan horizontal (de préférence pour coopérer chacun avec une crémaillère) soit dans le même plan vertical ou sensiblement le même plan vertical (de préférence pour coopérer tous deux avec une même crémaillère).

Dans le cadre de ce dernier mode de réalisation, le train d'engrenage comporte avantageusement deux groupements en parallèle ménagés chacun pour l'entrainement de l'un des deux pignons de sortie, dans lequel :
(i) un premier groupement, pour l'entrainement en rotation d'un premier desdits pignons de sortie, est mené directement par les moyens moteurs, et
(ii) un second groupement, pour l'entrainement en rotation d'un second desdits pignons de sortie, est mené par ledit premier groupement, lequel second groupement comporte ledit élément asservi associé auxdits moyens limiteurs de couple.

Dans ce cadre, le premier groupement et le second groupement comprennent avantageusement chacun au moins un réducteur épicycloïdal composé d'un planétaire, d'une couronne et de satellites ; le planétaire dudit second groupement correspond à l'élément asservi associé aux moyens limiteurs de couple, et les satellites de ce second groupement sont agencés pour mener, directement ou indirectement, le second pignon de sortie.

Dans ce cas, les couronnes des deux groupements en parallèle comportent avantageusement des moyens pour leur accouplement en rotation, par exemple par le biais de dentures externes accouplées directement ou par l'intermédiaire d'un pignon fou intermédiaire.

Encore dans ce cas, chaque groupement en parallèle comporte avantageusement, en aval du réducteur épicycloïdal, deux réducteurs en série : - un réducteur épicycloïdal, composé d'un planétaire, d'une couronne et de satellites, et - une roue dentée ; en outre, les réducteurs en série sont inversés sur les deux groupements en parallèle, avec des moyens d'accouplement en rotation entre la couronne d'un réducteur épicycloïdal de l'un desdits groupements parallèles et la roue dentée de l'autre groupement parallèle.

La présente invention concerne encore, de manière générale, une installation pour manoeuvrer une structure mobile en élévation ou en abaissement par rapport à un support fixe, laquelle installation comprend plusieurs dispositifs conformes à l'invention, superposés les uns aux autres.

Cette installation consiste avantageusement en un engin offshore du type auto-élévateur (ou « jack-up), dans lequel la structure mobile est constituée par la jambe et le support fixe est constitué par la coque.

De préférence, le châssis équipe le support fixe (en d'autres termes, le châssis est avantageusement porté par le support fixe).

Une telle structure est particulièrement intéressante en ce qu'elle permet la manoeuvre des jambes de l'engin auto-élévateur dans des conditions de houles habituellement défavorables (une houle modérée, voire une houle forte), cela en prévenant l'application d'une surcharge statique ou dynamique sur le train d'engrenage.

Elle permet en particulier une dissipation et une absorption efficace des efforts provenant de la percussion des jambes mobiles contre le fond marin.

### DESCRIPTION DÉTAILLÉE D'UN EXEMPLE DE RÉALISATION

La présente invention est encore illustrée sans être aucunement limitée, par la description suivante de différents modes de réalisation, en relation avec les figures annexées dans lesquelles :
- la figure 1 est une vue générale schématique d'un engin offshore équipé de dispositifs de manoeuvre selon l'invention ;
- la figure 2 est une vue générale et schématique d'un premier mode de réalisation d'un dispositif selon l'invention comportant un unique pignon de sortie qui est entraîné par un train d'engrenage associé à des moyens moteurs ;
- la figure 3 représente schématiquement un second mode de réalisation d'un dispositif selon l'invention, comprenant deux pignons de sortie destinés à être montés dans un plan horizontal et dont le train d'engrenage comporte deux groupements en parallèle comprenant chacun un réducteur épicycloïdal ;
- la figure 4 représente un troisième mode de réalisation d'un dispositif selon l'invention, constituant une variante du mode de réalisation selon la figure 3, dans laquelle les pignons de sortie sont montés dans un plan vertical ;
- la figure 5 représente un quatrième mode de réalisation d'un dispositif selon l'invention, dans lequel les deux pignons de sortie sont montés dans un plan horizontal et sont entraînés en rotation par un train d'engrenage qui comprend deux groupements en parallèle composés chacun de deux réducteurs positionnés en série d'un réducteur épicycloïdal amont ;
- la figure 6 représente un cinquième mode de réalisation d'un dispositif selon l'invention, constituant une alternative au mode de réalisation selon la figure 5, dans laquelle les pignons de sortie sont montés selon un plan vertical.

Les dispositifs de manoeuvre 1 selon l'invention sont avantageusement destinés à équiper un engin mobile.

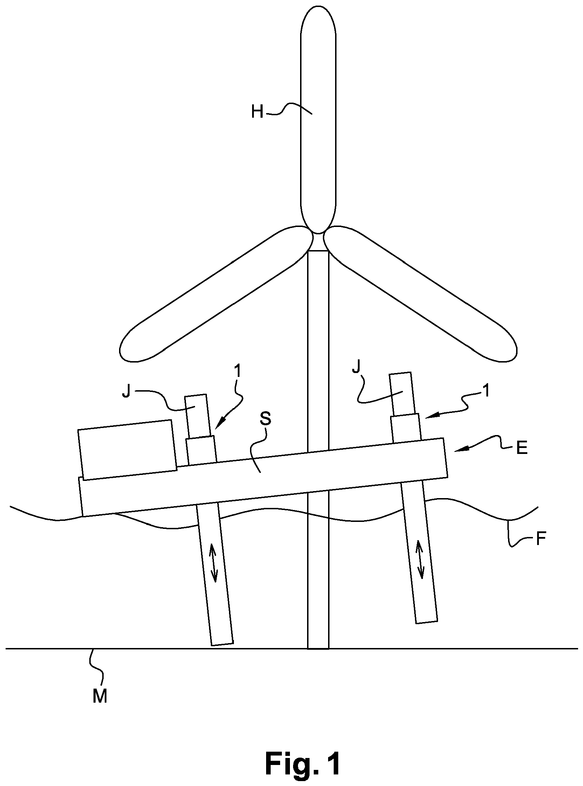

Cet engin mobile E consiste avantageusement en une plateforme ou un navire, du type auto-élévateur (désignés encore couramment en anglais sous le terme « jack up »), qui se rencontre en particulier dans les applications offshore par exemple pour la pose d'éolienne offshore (figure 1).

Le dispositif de manoeuvre selon l'invention est en particulier destiné à permettre la manoeuvre en élévation ou en abaissement d'une structure mobile J, par exemple une jambe, par rapport à un support fixe S, par exemple une coque de l'engin offshore E.

Un tel engin offshore E peut se déplacer par flottaison de sa coque S à la surface de l'eau F lorsque les jambes J sont relevées ; cet enfin E est apte à s'appuyer sur le fond marin M lorsque ses jambes J sont abaissées, éventuellement de sorte que sa coque S se situe au-dessus de la surface de l'eau F.

En pratique, tel qu'illustré sur la figure 1, l'engin auto-élévateur E comporte plusieurs jambes J associées chacune à ce dispositif de manoeuvre 1, voire plusieurs dispositifs de manoeuvre 1 qui sont superposés les uns par rapport aux autres au sein d'une installation de manoeuvre.

Un tel dispositif de manoeuvre 1 pourrait être mis en oeuvre pour le déplacement de toute autre structure mobile par rapport à un support fixe, utilisant une transmission par engrenage du type « pignon-crémaillère ».

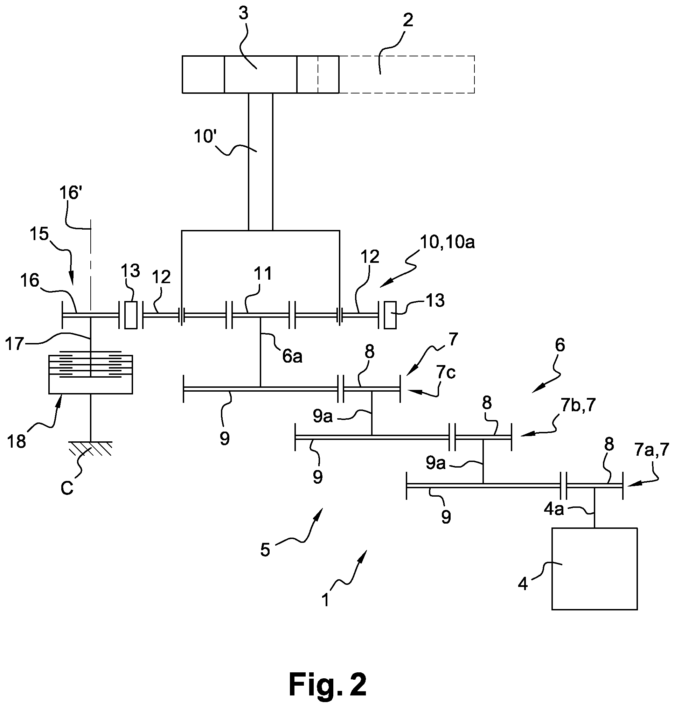

Dans un premier mode de réalisation illustré sur la figure 2, ce dispositif de manoeuvre 1 comprend :
- au moins une crémaillère verticale 2 (représentée très schématiquement sur la figure 2), solidaire avantageusement de l'une des jambes (non représentées), et
- un pignon de sortie 3, qui est solidaire ici du support fixe et qui engrène avec la crémaillère verticale 2.

En fonction de la puissance nécessaire, plusieurs dispositifs de manoeuvre 1 peuvent être superposés de sorte à coopérer avec une même crémaillère 2 équipant la jambe à manoeuvrer.

Le pignon de sortie 3 est entraîné par des moyens moteurs 4, cela par l'intermédiaire d'un train d'engrenage 5 porté par un châssis C (illustré ici très schématiquement sur la figure 2) qui équipe avantageusement le support fixe.

Les moyens moteurs 4 consistent avantageusement en un moteur de type hydraulique ou électrique,
Le train d'engrenage 5 comprend, de manière classique en soi, différents éléments formant roues, pignons et couronne.

Du côté des moyens moteurs 4, ce train d'engrenage 5 comporte un groupement amont de réducteurs élémentaires 6 en série, ici à géométrie de parallélisme.

Ce groupement amont de réducteurs élémentaires 6 se compose en particulier d'une série de réducteurs élémentaires 7.

Ces réducteurs élémentaires 7 sont ici au nombre de trois à savoir, successivement de l'amont vers l'aval, un réducteur élémentaire amont 7a, un réducteur élémentaire intermédiaire 7b et un réducteur élémentaire aval 7c.

Chacun de ces réducteurs élémentaires 7 consiste en un réducteur à engrenage cylindrique extérieur, qui se compose d'un engrenage unique comprenant un pignon 8 et une roue 9.

En particulier, le pignon 8 du réducteur élémentaire amont 7a est entraîné en rotation par un arbre de sortie 4a des moyens moteurs 4. Les pignons 8 des réducteurs élémentaires intermédiaire 7b et aval 7c sont quant à eux entraînés par l'arbre de sortie 9a prolongeant les roues 9 des réducteurs élémentaires amont 7a et intermédiaire 7b.

La roue 9 du réducteur élémentaire aval 7c est quant à elle équipée d'un arbre intermédiaire 6a formant, d'une part, l'arbre de sortie du groupement amont de réducteurs élémentaires 6 et, d'autre part, l'arbre d'entrée d'un premier groupement réducteur aval 10 destiné à entrainer en rotation le pignon de sortie 3.

Ce premier groupement réducteur aval 10 consiste ici en un réducteur secondaire 10a de type réducteur épicycloïdal élémentaire.

Le réducteur épicycloïdal 10a se compose de différents éléments :
- un pignon 11, formant un planétaire, entraîné en rotation par l'arbre intermédiaire 6a précité,
- des pignons satellites 12, entraînés en rotation autour du pignon planétaire 11 et raccordés à un arbre de sortie 10' associé au pignon de sortie 3 coopérant avec la crémaillère 2, et
- une couronne 13, coopérant avec les pignons satellites 12, apte à subir un phénomène de rotation.

Ce réducteur épicycloïdal 10a est accouplé avec un second groupement aval 15 constitutif du train d'engrenage 5 et formant un groupement parallèle qui est structuré pour prévenir l'application d'une surcharge statique ou dynamique au sein de ce train d'engrenage 5.

De manière générale, une « surcharge statique » consiste en une augmentation de l'effort extérieur sur le pignon de sortie 3 (ou les pignons de sortie) alors que les moyens moteurs 4 sont immobiles.

Une « surcharge dynamique » consiste quant à elle en une augmentation de l'effort sur le pignon de sortie 3 (ou les pignons de sortie) qui est provoquée par l'inertie en rotation des moyens moteurs 4.

A cet égard, ce second groupement aval 15, parallèle au premier groupement 10, comprend un pignon asservi 16 qui est apte à pivoter autour d'un axe de rotation 16' et qui est accouplé avec la couronne 13 du réducteur épicycloïdal 10a.

Cet accouplement s'effectue ici par un engrenage direct de ce pignon asservi 16 avec une denture extérieure (non représentée) ménagée sur la couronne 13 du réducteur épicycloïdal 10a.

Ce pignon asservi 16 est porté par un arbre 17 coopérant avec le châssis C, cela par l'intermédiaire de moyens limiteurs de couple 18 qui définissent le couple à appliquer sur ledit pignon asservi 16 pour provoquer sa rotation autour de son axe 16'.

De manière générale, par « moyens limiteurs de couple », on entend des moyens aptes à permettre la dissipation d'efforts survenant au sein du train d'engrenages 5 lorsque le couple en présence est supérieur à une valeur déterminée.

Ces moyens limiteurs de couple 18 sont choisis avec un couple limite qui est déterminé de sorte :
- à immobiliser en rotation le pignon asservi 16 (et donc la couronne 13 accouplée) par rapport au châssis C lorsque son couple est inférieur audit couple limite, afin d'assurer une manoeuvre en rotation des satellites 12 apte à provoquer l'entraînement en rotation du pignon de sortie 3 et la mise en translation de la crémaillère 2 avec la structure mobile associée, et
- à autoriser une rotation dudit pignon asservi 16 autour de son axe de rotation 16' (et donc une rotation de la couronne 13 accouplée) lorsque son couple est supérieur audit couple limite, pour éviter l'application d'une surcharge statique ou dynamique sur le train d'engrenages 5.

En particulier, en cas de surcharge, la couronne 13 exerce un effort sur le pignon asservi 16 jusqu'à ce que ce dernier entre en rotation, autorisant ainsi également la rotation de la couronne 13.

Par « couple », on entend ici en particulier l'effort en rotation appliqué sur l'arbre 17 portant le pignon asservi 16 et équipé des moyens limiteurs de couple 18.

La valeur de ce couple limite est avantageusement comprise entre 0,3 et 3 fois l'effort nominal, cet effort nominal correspondant en particulier au poids de la coque S. De préférence encore, ce couple limite est compris entre 1 et 2 fois l'effort nominal.

A titre indicatif, l'effort nominal est par exemple de 200 tonnes sur chaque pignon asservi 16. Le couple limite des moyens limiteurs de couple 18 est ainsi avantageusement compris entre 200 tonnes et 400 tonnes.

Les moyens limiteurs de couple 18 consistent par exemple en un frein multidisques, qui est associé à des moyens de refroidissement à l'eau.

Cette forme de réalisation des moyens limiteurs de couple 18 présente les avantages suivants :
- l'arbre 17 portant l'élément asservi 16 est fixe, et les moyens limiteurs de couple 18 consistent avantageusement en un simple frein, apportant ainsi la fiabilité nécessaire,
- les moyens limiteurs de couple 18 étant fixes, leur alimentation en eau de refroidissement est aisée,
- on obtient également un couple de retenue élevé, une grande puissance de freinage, un faible encombrement, une utilisation éprouvée en milieu « offshore ».

Les moyens limiteurs de couple 18 comportent avantageusement des moyens pour ajuster le couple limite au cours de la manoeuvre de la structure mobile.

Ces moyens d'ajustement du couple limite consistent par exemple en un dispositif de modulation de l'effort de serrage des disques.

Cet ajustement du couple limite est piloté par exemple par une pression pneumatique ou hydraulique, qui s'oppose à des moyens de rappel dans une position de couple de glissement maximal.

Ces moyens d'ajustement du couple limite font varier par exemple le couple limite de la manière suivante :
- un effort de serrage faible (typiquement 0,3 fois l'effort nominal) quant le poids d'une jambe s'applique seul sur le pignon asservi 16, et
- une augmentation progressive de l'effort de serrage quand l'engin sort de l'eau et que son poids s'applique sur la jambe associée.

Ces moyens d'ajustement du couple limite sont avantageusement commandés par des moyens électroniques et/ou logiciels adaptés.

Les moyens limiteurs de couple 18 sont encore avantageusement associés à des moyens de mesure du couple au niveau du pignon de sortie 3.

Ces moyens de mesure du couple (non représentés) sont classiques en soi et sont avantageusement choisis parmi les dispositifs connus.

Les moyens limiteurs de couple 18 comportent encore avantageusement des moyens pour leur pilotage dans une position inactive, permettant une désactivation de ces moyens limiteurs de couple 18 et assurant ainsi un verrouillage en rotation du pignon asservi 16 quel que soit le couple appliqué.

Ces moyens de pilotage dans une position inactive peuvent en pratique être assurés directement par les moyens limiteurs de couple 18 qui sont équipés de moyens de rappel dans ladite position inactive pour, au repos, produire un couple de glissement supérieur à la résistance du reste du dispositif et être alors considérés comme bloqués.

De manière complémentaire ou alternative, ces moyens de pilotage dans une position inactive consistent par exemple en un dispositif de type embrayage, de préférence un embrayage à crabot.

Ces moyens de pilotage dans une position inactive sont par exemple mis en oeuvre lorsqu'il n'y a plus de sollicitations variables dues à la mer, en particulier lorsque la coque S sort de l'eau et que son poids est supporté par les jambes J.

En pratique, la mise en oeuvre des moyens moteurs 4 permet l'entraînement en rotation des éléments 8, 9 constitutifs du groupement amont de réducteurs élémentaires 6.

Lorsque la jambe associée est libre de se déplacer, sans obstacle, en particulier lorsque cette jambe n'est pas en appui sur le fond marin, le couple au niveau de l'arbre 17 portant le pignon asservi 16 reste inférieur au couple limite précité ; ce pignon asservi 16 et sa couronne 13 associée restent ainsi fixes.

Le pignon asservi 16 et sa couronne 13 constituent ainsi des éléments asservis qui sont destinés à ramener ce mécanisme à un seul degré de mobilité.

Dans cette configuration, le pignon de sortie 3 est asservi en rotation, cela par l'intermédiaire du train d'engrenages 5, provoquant ainsi le déplacement de sa crémaillère 2 avec la jambe associée.

La jambe est ainsi apte à être manoeuvrée en translation, en montée ou en descente, par le train d'engrenages 5.

De la même manière, lorsque la jambe est en appui normal sur un obstacle (par exemple lorsque la jambe repose sur le fond marin), le couple au niveau de l'arbre 17 portant le pignon asservi 16 augmente tout en restant inférieur au couple limite précité.

Dans ce cas, le couple est par exemple de l'ordre de 1 fois l'effort nominal.

Lorsqu'il n'y a plus de sollicitations variables dues à la mer, en particulier lorsque la coque S sort de l'eau et que son poids est supporté par les jambes J, il est utile de désactiver les moyens limiteurs de couple 18.

Cette jambe en appui est là encore apte à être manoeuvrée classiquement en translation par le train d'engrenages 5.

Dans ce cas, le mouvement de descente de la jambe par rapport à la coque provoque un soulèvement de la coque par rapport à la surface de l'eau ; le mouvement de montée de la jambe par rapport à la coque provoque une descente de la coque vers la surface de l'eau puis un escamotage vertical complet de cette jambe.

Mais, au cours de sa manoeuvre, la jambe est susceptible de subir un effort orienté dans sa direction de translation, en particulier dans le sens montant. Un tel phénomène survient par exemple lorsque la coque flotte à la surface de l'eau, avec une houle imposant des mouvements de roulis et/ou de tangage provoquant une percussion de cette jambe contre le fond marin.

Une surcharge est alors générée sur le pignon de sortie 3, qui se répercute sur l'ensemble du train d'engrenages 5.

Dans ce contexte, la couronne 13 du réducteur épicycloïdal 10a génère un effort en rotation sur le pignon asservi 16 conduisant à une augmentation du couple au niveau de son arbre 17.

Si ce couple dépasse le couple limite caractéristique des moyens limiteurs de couple 18, le pignon asservi 16 entre alors en rotation freinée autour de son axe 16' ; ce phénomène autorise ainsi la rotation de la couronne 13 associée.

L'entraînement de la motorisation 4 est ainsi transmis au pignon asservi 16 par l'intermédiaire de la couronne 13 associée.

Ce phénomène mécanique permet ainsi la dissipation de cette surcharge générée, évitant une détérioration mécanique des éléments constituant le train d'engrenages 5.

Par ailleurs, lors de ces manoeuvres de la jambe, il peut être intéressant d'ajuster le couple limite caractéristique des moyens limiteurs de couple 18.

Lorsque toute la masse ou au moins approximativement toute la masse de l'engin est transférée sur les jambes en appui sur le fond marin, qui est déterminé par les moyens de mesure du couple précités, la houle ne sera plus susceptible de provoquer une percussion des jambes contre ce fond marin.

Dans ce cas, la translation est alors avantageusement pilotée exclusivement par les moyens moteurs 4, avec les moyens limiteurs de couple 18 dans la configuration désactivée.

De manière inverse, lorsque la coque revient au niveau de l'eau, les moyens limiteurs de couple 18 peuvent être ramenés dans une configuration active, permettant ainsi d'éviter l'application des surcharges statiques/dynamiques sur le train d'engrenages 5.

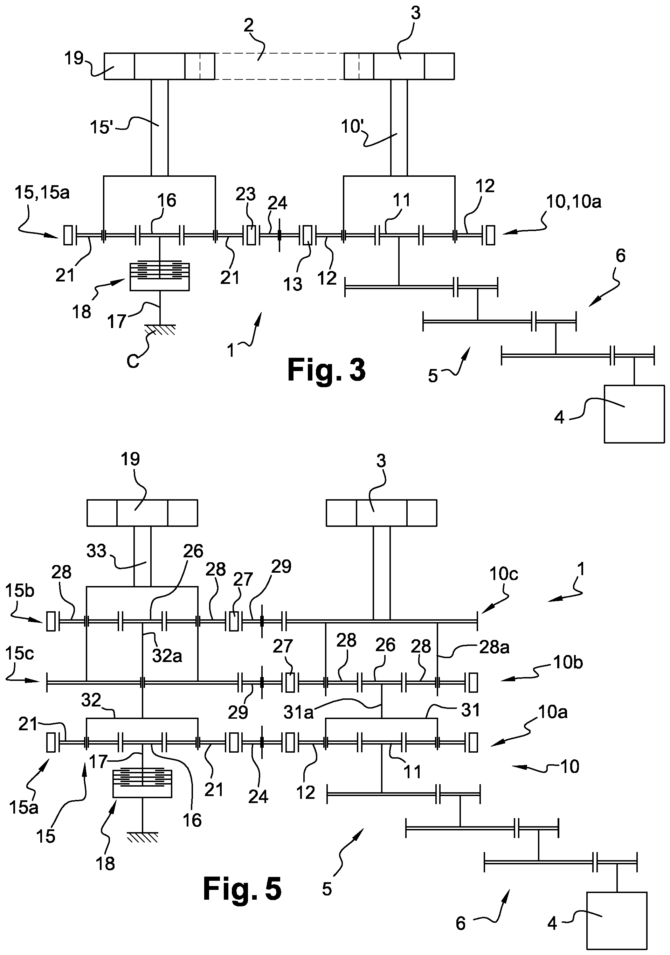

D'autres formes de réalisations de l'invention sont décrites ci-dessous en relation avec les figures 3 à 6.

De manière générale, les repères utilisés en relation avec la figure 2 sont conservés pour désigner les structures identiques ou similaires.

La figure 3 représente ainsi un dispositif de manoeuvre 1 similaire à celui décrit ci-dessus en relation avec la figure 2, en ce qu'il comporte des moyens moteurs 4 prolongés par un groupement amont de réducteurs élémentaires 6 suivi de deux groupements réducteurs aval 10, 15 en parallèle.

Là encore, le premier groupement réducteur aval 10, mené directement par les moyens moteurs 4, consiste en un réducteur épicycloïdal, 10a qui entraine en rotation le pignon de sortie 3.

Cette forme de réalisation se démarque de la précédente par la présence d'un second pignon de sortie 19 qui engrène un second côté d'une crémaillère 2 du type double (représentée très schématiquement sur la figure 3).

Les deux pignons 3, 19, qui attaquent les deux côtés de la crémaillère 2, ont des axes de rotation horizontaux qui se situent ici dans le même plan horizontal, ou au moins approximativement dans le même plan horizontal.

Ce second pignon de sortie 19 est entrainé en rotation par l'intermédiaire du second groupement réducteur aval 15.

Ce second groupement réducteur aval 15 est mené par le premier groupement réducteur aval 10 ; et il comporte le pignon asservi 16 associé, en amont, aux moyens limiteurs de couple 18.

Pour cela, ce second groupement réducteur aval 15 consiste ici également en un réducteur secondaire 15a de type réducteur épicycloïdal élémentaire.

Ce réducteur épicycloïdal 15a se compose de différents éléments :
- le pignon 16, formant un planétaire, constituant le pignon asservi porté par l'arbre 17 équipé des moyens limiteurs de couple 18,
- trois pignons satellites 21 (dont deux seulement sont représentés), entraînés en rotation autour du planétaire 16 et raccordés à un arbre de sortie 15' associé au second pignon de sortie 19 coopérant avec la crémaillère 2, et
- une couronne 23, coopérant avec les satellites 21.

Les satellites 21 de ce second groupement réducteur aval 15 mènent ainsi directement le second pignon de sortie 19.

La couronne 23 de ce second réducteur épicycloïdal 15a coopère avec la couronne 13 du premier réducteur épicycloïdal 10a par l'intermédiaire de moyens d'accouplement en rotation 24, en l'occurrence un pignon fou intermédiaire.

En fonctionnement normal, les pignons satellites 12 du premier réducteur épicycloïdal 10a entraînent le premier pignon 3 en rotation qui engrène l'un des côtés de la double crémaillère 2.

Ces pignons satellites 12 entraînent également la couronne 13 en rotation, dont le mouvement est transmis à la couronne 23 du second réducteur épicycloïdal 15a par l'intermédiaire du pignon fou intermédiaire 24.

La couronne 23 du second réducteur épicycloïdal 15a manoeuvre alors en rotation les satellites 21 associés autour du pignon asservi 16, fixe, entraînant ainsi la rotation du second pignon de sortie 19 sur l'autre côté de la double crémaillère 2.

Tel qu'abordé ci-dessus en relation avec la figure 2, le pignon asservi 16 est fixe en rotation tant que le couple de son arbre 17 reste inférieur au couple limite des moyens limiteurs de couple 18 associés.

Le rapport de réduction entre la couronne 13 du premier réducteur épicycloïdal 10a et les satellites 21 du second réducteur épicycloïdal 15a est tel que les efforts sur les deux pignons 3, 19 sont voisins.

Les deux pignons de sortie 3, 19 du train d'engrenages 5 ont un mouvement différentiel et tournent en sens inverse. Ces deux pignons 3, 19 développent ainsi des efforts rigoureusement proportionnels, l'un étant en réaction de l'autre.

La jambe portée par la crémaillère 2 est ainsi manoeuvrée en translation, selon un mouvement de montée ou de descente.

Ce mode de réalisation présente les avantages suivants :
- l'effort est le même sur les deux pignons, en toute circonstance,
- le poids total d'un ensemble réducteur à deux pignons est inférieur au poids de deux ensembles classiques.

Si une surcharge est générée sur les pignons de sortie 3 et 19, les deux réducteurs épicycloïdaux 10a et 15a génèrent un effort en rotation notamment sur le pignon asservi 16 conduisant à une augmentation du couple au niveau de son arbre 17.

Si ce couple dépasse le couple limite spécifique des moyens limiteurs de couple 18, le pignon asservi 16 entre alors en rotation autour de son axe 16', généralement du fait d'un entraînement par une surcharge venant des pignons de sortie 3 et 19.

Ce phénomène mécanique permet ainsi la dissipation de cette surcharge, évitant une détérioration des éléments constituant le train d'engrenages 5.

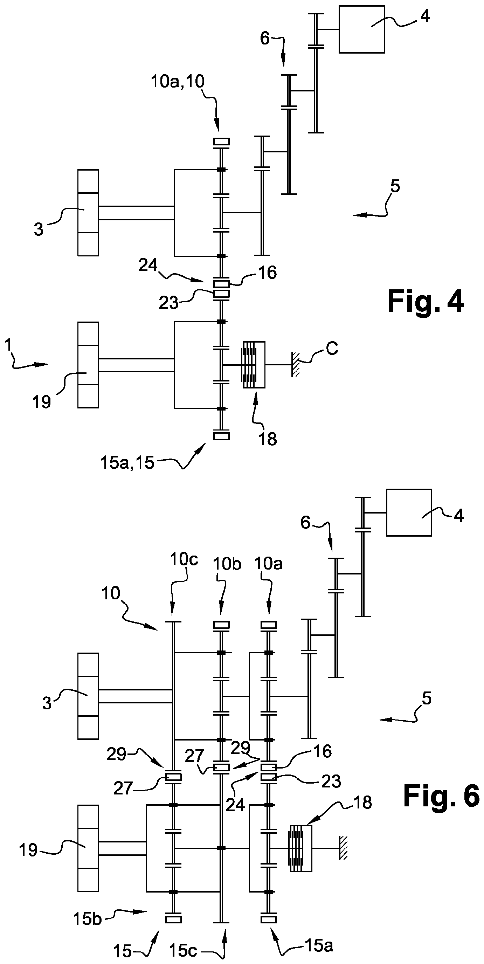

La figure 4 illustre une variante du mode de réalisation selon la figure 3, qui se distingue de ce dernier par le positionnement des pignons de sortie 3, 19 dans un même plan vertical, ou au moins approximativement dans un même plan vertical pour coopérer avec une même crémaillère verticale.

Cette forme de réalisation est intéressante quant la largeur de la crémaillère est importante, dans le cas d'une jambe cylindrique par exemple.

Dans ce cadre, le train d'engrenages 5 est pratiquement identique à celui décrit ci-dessus en relation avec la figure 3 en ce qu'il comporte des moyens moteurs 4 prolongés par un groupement amont de réducteurs élémentaires 6 suivi de deux groupements réducteurs aval 10, 15 en parallèle consistant chacun en un réducteur épicycloïdal 10a, 15a.

Là encore, le second réducteur épicycloïdal 15a est associé, en aval, au second pignon de sortie 19 et, en amont, aux moyens limiteurs de couple 18.

Cette forme de réalisation se distingue uniquement par les moyens d'accouplement 24 entre les deux réducteurs épicycloïdaux 10a et 15a.

En effet, ici, la couronne 16 du premier réducteur épicycloïdal, 10a est engrenée directement sur la couronne 23 du second réducteur épicycloïdal, 15a, avantageusement par l'intermédiaire de dentures extérieures complémentaires.

Les deux pignons de sortie 3, 19 du train d'engrenages 5 ont alors un mouvement différentiel et tournent dans un même sens.

Cette forme de réalisation présente les avantages suivants : un faible encombrement vertical, un faible poids compte tenu de l'absence de pignon fou, une égalité des efforts sur deux « étages » de pignons.

La figure 5 représente également une variante de réalisation de la figure 3, dont l'intérêt est essentiellement une diminution du diamètre de l'ensemble réducteur qui permet un montage plus compact, qui est plus léger et qui est moins onéreux.

Cette variante comporte toujours des moyens moteurs 4 prolongés par un groupement amont de réducteurs élémentaires 6 suivi de deux groupements réducteurs aval 10, 15 en parallèle.

Là encore, le second groupement réducteur aval 15 est associé, en aval, au second pignon de sortie 19 et, en amont, aux moyens limiteurs de couple 18.

Chaque groupement réducteur aval 10, 15 comporte toujours, en amont, un réducteur épicycloïdal, 10a, 15a tel que décrit ci-dessus en relation avec la figure 3.

Mais, en aval de ce réducteur épicycloïdal, 10a, 15a, chaque groupement réducteur aval 10, 15 se distingue par la présence de deux réducteurs supplémentaires 10b, 10c ; 15b, 15c agencés en série et coaxiaux :
- un réducteur épicycloïdal, supplémentaire 10b ; 15b, composé d'un pignon planétaire 26, d'une couronne 27 et de pignons satellites 28, et
- une roue dentée 10c ; 15c.

Dans chaque groupement réducteur aval 10, 15, certains éléments sont agencés coaxialement : le pignon planétaire 11, 16 du réducteur épicycloïdal amont 10a, 15a, le pignon planétaire 26 du réducteur épicycloïdal, aval 10b, 15b et la roue dentée 10c, 15c.

Les satellites 12 et 21 des réducteur épicycloïdaux amont 10a, 15a mènent indirectement les pignons de sortie 3, 19 qui leurs sont associés.

Les réducteurs supplémentaires 10b, 10c; 15b, 15c en série sont inversés entre les deux groupements réducteurs aval 10, 15.

Ainsi, le premier groupement réducteur aval 10 comporte le réducteur épicycloïdal, 10b, suivi de la roue dentée 10c ; à l'inverse, le second groupement réducteur 15 comporte la roue dentée 15c suivie du réducteur épicycloïdal 15b.

Dans ce contexte, le réducteur épicycloïdal, 10b et la roue dentée 10c du premier groupement réducteur 10 sont agencés parallèlement, respectivement, à la roue dentée 15c et au réducteur épicycloïdal, 15b du second groupement réducteur 15.

De plus, la couronne 27 du réducteur épicycloïdal, 10b et la roue dentée 10c du premier groupement réducteur aval 10 sont accouplées en rotation, respectivement, avec la roue dentée 15c et la couronne 27 du réducteur épicycloïdal, 15b du second groupement réducteur aval 15.

Cette coopération en rotation s'effectue ici par l'intermédiaire de moyens d'accouplement en rotation 29, en l'occurrence un pignon fou intermédiaire.

En outre, au sein du premier groupement réducteur aval 10, les pignons satellites 12 du réducteur épicycloïdal amont 10a sont raccordés, par un porte-satellite 31 muni d'un arbre 31a, avec le pignon planétaire 26 du réducteur épicycloïdal, supplémentaire 10b.

Les pignons satellites 28 de ce réducteur épicycloïdal, supplémentaire 10b sont eux-mêmes assemblés, par un porte-satellite 28a, avec la roue dentée 10c qui porte le premier pignon de sortie 3.

Au sein du second groupement réducteur aval 15, les pignons satellites 21 du réducteur épicycloïdal, amont 15a sont quant à eux assemblés sur un porte-satellite 32 dont l'arbre de sortie 32a est assemblé avec le pignon planétaire 26 du réducteur épicycloïdal, supplémentaire 15c ; pour cela, cet arbre 32a traverse la roue dentée 15c.

Un porte-satellite 33 est solidarisé, d'un côté amont, avec la roue dentée 15c et, d'un côté aval, avec le second pignon de sortie 19 ; à cet effet, ce porte-satellite 33 traverse les pignons satellites 28 du réducteur épicycloïdal, supplémentaire 15b.

Tel que développé ci-dessus, si une surcharge est générée, les deux réducteurs épicycloïdaux amont 10a et 15a génèrent un effort en rotation notamment sur le pignon asservi 16 conduisant à une augmentation du couple au niveau de son arbre 17.

Si ce couple dépasse le couple limite caractéristique des moyens limiteurs de couple 18, l'effort d'entraînement de la motorisation 4 provoque alors une rotation du pignon asservi 16 autour de son axe 16'.

Ce phénomène mécanique permet ainsi la dissipation de cette surcharge, évitant une détérioration des éléments constituant le train d'engrenages 5.

Les deux pignons de sortie 3, 19 du train d'engrenages 5 tournent ainsi en sens inverse.

La figure 6 illustre une variante du mode de réalisation selon la figure 5, qui s'en distingue par le positionnement des pignons de sortie 3, 19 dans un même plan vertical, ou au moins approximativement dans un même plan vertical.

Là encore, l'intérêt est essentiellement une diminution du diamètre de l'ensemble réducteur qui permet un montage plus compact, qui est plus léger et qui est moins onéreux.

Dans ce cadre, le train d'engrenages 5 est pratiquement identique à celui décrit ci-dessus en relation avec la figure 5 en ce qu'il comporte des moyens moteurs 4 prolongés par un groupement amont de réducteurs élémentaires 6 suivi de deux groupements réducteurs aval 10, 15 en parallèle consistant chacun en un réducteur épicycloïdal 10a, 15a suivi de deux réducteurs supplémentaires 10b, 10c ; 15b, 15c agencés en série.

Là encore, le second groupement réducteur aval 15 est associé, en aval, au second pignon de sortie 19 et, en amont, aux moyens limiteurs de couple 18.

Cette forme de réalisation se distingue uniquement par la structure des moyens d'accouplement entre les groupements 10, 15 en parallèle, ici :
- la couronne 16 du premier réducteur épicycloïdal 10a est engrenée directement sur la couronne 23 du second réducteur épicycloïdal 15a, avantageusement par l'intermédiaire de dentures extérieures complémentaires formant des moyens d'accouplement 24,
- la couronne 27 du réducteur épicycloïdal supplémentaire 10b du premier groupement 10 est engrenée directement sur la roue dentée 15c du second groupement 15, avantageusement par l'intermédiaire de dentures extérieures complémentaires formant des moyens d'accouplement 29, et
- la couronne 27 du réducteur épicycloïdal supplémentaire 15b du second groupement 15 est engrenée directement sur la roue dentée 10c du premier groupement 10, avantageusement également par l'intermédiaire de dentures extérieures complémentaires formant des moyens d'accouplement 29.

Dans ce cas, les deux pignons de sortie 3, 19 du train d'engrenages 5 tournent dans un même sens.

Selon une variante des modes de réalisation selon les figures 5 et 6, les deux réducteurs supplémentaires 10b, 10c ; 15b, 15c pourraient être inversés l'un par rapport à l'autre.

Dans ce cas, le premier groupement réducteur 10 comporte la roue dentée 10c en amont, suivie du réducteur épicycloïdal supplémentaire 10b ; à l'inverse, le second groupement réducteur 15 comporte le réducteur épicycloïdal 15b suivi de la roue dentée 15c.

D'une manière générale, une telle structure mécanique selon l'invention permet la dissipation de toute surcharge dynamique ou statique appliquée sur le train d'engrenage et susceptible d'aboutir à une détérioration de ses éléments constitutifs.

## Revendications

1. Dispositif pour la manoeuvre en translation d'une structure mobile par rapport à un support fixe, lequel dispositif (1) comprend :
- au moins une crémaillère (2), solidaire de ladite structure mobile ou dudit support fixe, et
- au moins un pignon de sortie (3, 19), qui est solidaire respectivement dudit support fixe ou de ladite structure mobile et qui engrène avec ladite crémaillère (2), pour la manoeuvre en translation de ladite structure mobile selon un axe de translation,
lequel pignon de sortie (3, 19) est entraîné par des moyens moteurs (4), cela par l'intermédiaire d'un train d'engrenage (5) porté par un châssis (C), lequel train d'engrenage (5) comprend des éléments formant roues, pignons et/ou couronnes,
**caractérisé en ce que** l'un au moins desdits éléments (16) dudit train d'engrenage (5) consiste en un élément asservi (16) porté par un arbre (17) équipé de moyens limiteurs de couple (18) coopérant avec ledit châssis (C),
lesquels moyens limiteurs de couple (18) présentent un couple limite qui est déterminé de sorte :
- à immobiliser en rotation ledit élément asservi (16) par rapport audit châssis (C) lorsque son couple est inférieur audit couple limite, afin d'assurer la manoeuvre en translation de ladite structure mobile par l'entrainement en rotation dudit pignon de sortie (3, 19), et
- à autoriser une rotation dudit élément asservi (16) par rapport audit châssis (C) lorsque son couple est supérieur audit couple limite, pour éviter l'application d'une surcharge statique ou dynamique sur ledit train d'engrenage (5).

2. Dispositif de manoeuvre selon la revendication 1, **caractérisé en ce que** le couple limite des moyens limiteurs de couple (18) est compris entre 0,1 et 3 fois l'effort nominal.

3. Dispositif de manoeuvre selon l'une quelconque des revendications 1 ou 2, **caractérisé en ce que** les moyens limiteurs de couple (18) comportent des moyens pour ajuster le couple limite au cours de la manoeuvre.

4. Dispositif de manoeuvre selon l'une quelconque des revendications 1 à 3, **caractérisé en ce que** les moyens limiteurs de couple (18) comportent des moyens pour leur pilotage dans une position inactive, permettant une désactivation desdits moyens limiteurs de couple (18), dans laquelle l'élément asservi (16) est immobilisé en rotation par rapport audit châssis (C).

5. Dispositif de manoeuvre selon l'une quelconque des revendications 1 à 4, **caractérisé en ce que** les moyens limiteurs de couple (18) consistent en un frein multi-disques.

6. Dispositif de manoeuvre selon l'une quelconque des revendications 1 à 5, **caractérisé en ce que** les moyens limiteurs de couple (18) sont associés à des moyens de refroidissement à l'eau.

7. Dispositif de manoeuvre selon l'une quelconque des revendications 1 à 6, **caractérisé en ce qu'**il comporte une crémaillère verticale (2) associée à un pignon de sortie (3), et **en ce que** le train d'engrenage (5) comporte deux groupements en parallèle (10, 15) dans lequel :
- un premier groupement (10), pour l'entrainement en rotation dudit pignon de sortie (3), est mené directement par les moyens moteurs (4), et
- un second groupement (15) comporte ledit élément asservi (16) associé auxdits moyens limiteurs de couple (18).

8. Dispositif de manoeuvre selon l'une quelconque des revendications 1 à 6, **caractérisé en ce qu'**il comporte au moins deux pignons (3, 19) en sortie qui engrènent chacun avec une crémaillère (2), et qui s'étendent selon des axes parallèles entre eux, lesquels pignons de sortie (3, 19) sont entraînés par des moyens moteurs (4), cela par l'intermédiaire du train d'engrenage (5).

9. Dispositif de manoeuvre selon la revendication 8, **caractérisé en ce que** le train d'engrenage (5) comporte deux groupements (10, 15) en parallèle ménagés chacun pour l'entrainement de l'un des deux pignons (3, 19) en sortie, dans lequel :
- un premier groupement (10), pour l'entrainement en rotation d'un premier desdits pignons de sortie (3), est mené directement par les moyens moteurs (4), et
- un second groupement (15), pour l'entrainement en rotation d'un second desdits pignons de sortie (19), est mené par ledit premier groupement (10), lequel second groupement (15) comporte ledit élément asservi (16) associé auxdits moyens limiteurs de couple (18).

10. Dispositif de manoeuvre selon la revendication 9, **caractérisé en ce que** ledit premier groupement (10) et ledit second groupement (15) comprennent chacun au moins un réducteur épicycloïdal (10a, 15a) composé d'un planétaire (11, 16), d'une couronne (13, 23) et de satellites (12, 21), **en ce que** le planétaire (16) dudit second groupement (15) correspond à l'élément asservi (16) associé aux moyens limiteurs de couple (18), et **en ce que** les satellites (21) de ce second groupement (15) sont agencés pour mener, directement ou indirectement, le second pignon de sortie (19).

11. Dispositif de manoeuvre selon la revendication 10, **caractérisé en ce que** les couronnes (13, 23) des deux groupements en parallèle (10,15) comportent des moyens (24) pour leur accouplement en rotation.

12. Dispositif de manoeuvre selon l'une quelconque des revendications 10 ou 11, **caractérisé en ce que** chaque groupement en parallèle (10, 15) comporte, en aval du réducteur épicycloïdal (10a, 15a), deux réducteurs en série :
- un réducteur épicycloïdal (10b, 15b), composé d'un planétaire (26), d'une couronne (27) et de satellites (28), et
- une roue dentée (10c, 15c),
et **en ce que** lesdits réducteurs en série (10b, 10c ; 15b, 15c) sont inversés sur les deux groupements (10, 15) en parallèle, avec des moyens d'accouplement (29) en rotation entre la couronne (27) d'un réducteur épicycloïdal (10b, 15b) de l'un desdits groupements parallèles (10, 15) et la roue dentée (10c, 15c) de l'autre groupement parallèle (15).

13. Installation pour manoeuvrer une structure mobile en élévation ou en abaissement par rapport à un support, laquelle installation comprend plusieurs dispositifs (1) selon l'une quelconque des revendications 1 à 12, superposés les uns aux autres.

14. Installation selon la revendication 13, **caractérisée en ce qu'**elle consiste en un engin off-shore (E) du type auto-élévateur, dans laquelle la structure mobile (J) est constituée par une jambe et dans laquelle le support fixe (S) est constitué par une coque.

15. Installation selon la revendication 14, **caractérisée en ce que** le châssis (C) équipe le support fixe (S).

## Patentansprüche

1. Vorrichtung zum translatorischen Manövrieren einer in Bezug auf einen festen Träger beweglichen Struktur, wobei die Vorrichtung (1)
- wenigstens eine an der beweglichen Struktur oder dem festen Träger angebrachte Zahnstange (2) und
- wenigstens ein Abtriebsritzel (3, 19), das am festen Träger bzw. an der beweglichen Struktur befestigt ist und das mit der Zahnstange (2) kämmt, zum translatorischen Manövrieren der beweglichen Struktur entlang einer Translationsachse
aufweist,
wobei das Abtriebsritzel (3, 19) durch Antriebsmittel (4) angetrieben wird, und zwar mittels eines von einem Chassis (C) getragenen Getriebestrangs (5), der Räder, Zahnräder und/oder Zahnkränze bildende Elemente aufweist,
**dadurch gekennzeichnet, daß** wenigstens eins der Elemente (16) des Getriebestrangs (5) aus einem von einer Welle (17) getragenen gesteuerten Element (16) besteht, wobei die Welle mit mit dem Chassis (C) zusammenwirkenden Mitteln zum Begrenzen des Drehmoments (18) ausgestattet ist,
wobei die Mittel zum Begrenzen des Drehmoments (18) ein Grenzdrehmoment aufweisen, das derart bestimmt ist, daß
- das Drehen des gesteuerten Elements (16) gegenüber dem Chassis (C) gestoppt wird, wenn dessen Drehmoment geringer als das Grenzdrehmoment ist, um das Ausführen des translatorischen Manövrierens der beweglichen Struktur durch den Drehantrieb des Abtriebsritzels (3, 19) sicherzustellen, und
- ein Drehen des gesteuerten Elements (16) gegenüber dem Chassis (C) zu ermöglichten, wenn dessen Drehmoment größer als das Grenzdrehmoment ist, um das Anliegen einer statischen oder dynamischen Überlastung am Getriebestrang (5) zu verhindern.

2. Manövriervorrichtung gemäß Anspruch 1, **dadurch gekennzeichnet, daß** das Grenzdrehmoment der Mittel zum Begrenzen des Drehmoments (18) zwischen dem 0,1-fachen bis 3-fachen der Nominalkraft liegt.

3. Manövriervorrichtung gemäß einem der Ansprüche 1 oder 2, **dadurch gekennzeichnet, daß** die Mittel zum Begrenzen des Drehmoments (18) Mittel zum Einstellen des Grenzdrehmoments im Verlaufe des Manövrierens aufweisen.

4. Manövriervorrichtung gemäß einem der Ansprüche 1 bis 3, **dadurch gekennzeichnet, daß** die Mittel zum Begrenzen des Drehmoments (18) Mittel zum Steuern derselben in eine inaktive Position aufweisen, die ein Abschalten der Mittel zum Begrenzen des Drehmoments (18) ermöglicht und in der sich das gesteuerte Element (16) nicht gegenüber dem Chassis (C) dreht.

5. Manövriervorrichtung gemäß einem der Ansprüche 1 bis 4, **dadurch gekennzeichnet, daß** die Mittel zum Begrenzen des Drehmoments (18) aus einer Mehrscheibenbremse bestehen.

6. Manövriervorrichtung gemäß einem der Ansprüche 1 bis 5, **dadurch gekennzeichnet, daß** die Mittel zum Begrenzen des Drehmoments (18) Mitteln zum Kühlen mit Wasser zugeordnet sind.

7. Manövriervorrichtung gemäß einem der Ansprüche 1 bis 6, **dadurch gekennzeichnet, daß** sie eine einem Abtriebsritzel (3) zugeordnete senkrechte Zahnstange (2) aufweist und daß der Getriebestrang (5) zwei parallele Gruppierungen (10, 15) aufweist, bei denen
- eine erste Gruppierung (10) für den Drehantrieb des Abtriebsritzels (3) durch die Antriebsmittel (4) direkt angetrieben ist und
- eine zweite Gruppierung (15) das den Mitteln zum Begrenzen des Drehmoments (18) zugeordnete bewegliche Element (16) aufweist.

8. Manövriervorrichtung gemäß einem der Ansprüche 1 bis 6, **dadurch gekennzeichnet, daß** sie wenigstens zwei Abtriebsritzel (3, 19) aufweist, von denen jedes mit einer Zahnstange (2) kämmt und die sich entlang zueinander paralleler Achsen erstrecken, wobei die Abtriebsritzel (3, 19) durch Antriebsmittel (4) angetrieben werden, und zwar durch den Getriebestrang (5).

9. Manövriervorrichtung gemäß Anspruch 8, **dadurch gekennzeichnet, daß** der Getriebestrang (5) zwei parallele Gruppierungen (10, 15) aufweist, von denen jede für den Antrieb eines der Abtriebsritzel (3, 19) ausgelegt ist und bei denen
- eine erste Gruppierung (10) für den Drehantrieb des ersten der Abtriebsritzel (3) durch die Antriebsmittel (4) direkt angetrieben ist und
- eine zweite Gruppierung (15) für den Drehantrieb des zweiten der Abtriebsritzel (15) durch die erste Gruppierung (10) angetrieben wird, wobei die zweite Gruppierung (15) das den Mitteln zum Begrenzen des Drehmoments (18) zugeordnete bewegliche Element (16) aufweist.

10. Manövriervorrichtung gemäß Anspruch 9, **dadurch gekennzeichnet, daß** die erste Gruppierung (10) und die zweite Gruppierung (15) jeweils ein Planetengetriebe (10a, 15a) mit einem Planetenrad (11, 16), einem Kranz (13, 23) und Satellitenrädern (12, 21) aufweisen, daß das Planetenrad (16) der zweiten Gruppierung (15) dem den Mitteln zum Begrenzen des Drehmoments (18) zugeordneten beweglichen Element (16) entspricht und daß die Satellitenräder (21) der zweiten Gruppierung (15) so angeordnet sind, daß sie das zweite Abtriebsritzel (19) direkt oder indirekt antreiben.

11. Manövriervorrichtung gemäß Anspruch 10, **dadurch gekennzeichnet, daß** die Kränze (13, 23) der beiden parallelen Gruppierungen (10, 15) Mittel (24) für deren drehfeste Verbindung aufweisen.

12. Manövriervorrichtung gemäß einem der Ansprüche 10 oder 11, **dadurch gekennzeichnet, daß** jede parallele Gruppierung (10, 15) in Abtriebsrichtung nach dem Planetengetriebe (10a, 15a) zwei Getriebe in Reihe aufweist:
- ein Planetengetriebe (10b, 15b), das sich aus einem Planetenrad (26), einem Kranz (27) und Satellitenrädern (28) zusamtnensetzt, und
- ein Zahnrad (10c, 15c),
und daß die Getriebe in Reihe (10b, 10c; 15b, 15c) bei den beiden Gruppierungen invertiert sind und Mittel (29) zur drehfesten Verbindung zwischen dem Kranz (27) eines Planetengetriebes (10b, 15b) der einen der parallelen Gruppierungen (10, 15) und dem Zahnrad (10c, 15c) der anderen parallelen Gruppierung (15) aufweisen.

13. Anlage zum hebenden oder senkenden Manövrieren einer beweglichen Struktur gegenüber einem Träger, wobei die Anlage mehrere Vorrichtungen (1) gemäß einem der Ansprüche 1 bis 12 aufweist, die übereinander angeordnet sind.

14. Anlage gemäß Anspruch 13, **dadurch gekennzeichnet, daß** sie aus einer Off-shore-Einrichtung (E) vom selbstaufrichtenden Typ sind, bei der die bewegliche Struktur (J) durch eine Stütze gebildet ist und der feste Träger (S) durch eine Kapsel gebildet ist.

15. Anlage gemäß Anspruch 14, **dadurch gekennzeichnet, daß** das Chassis (C) den festen Träger (S) ausstattet.

## Claims

1. Device for manoeuvring a mobile structure in translation with respect to a fixed support, wherein said device (1) comprises:
- at least one rack (2), integral with said mobile structure or said fixed support, and
- at least one output pinion (3, 19), which is integral with said fixed support or said mobile structure, respectively, and which meshes with said rack (2), for the translational manoeuvre of said mobile structure along a translation axis,
which output pinion (3, 19) is driven by motor means (4), through a gear train (5) carried by a frame (C), which gear train (5) comprises wheel, pinion and/or ring gear elements,
**characterized in that** one at least of said elements (16) of said gear train (5) consists in a controlled element (16) carried by a shaft (17) equipped with torque limiting means (18) cooperating with said frame (C),
which torque limiting means (18) have a limit torque that is determined so as:
- to immobilize in rotation said controlled element (16) with respect to said frame (C) when the torque thereof is lower than said limit torque, in order to ensure the manoeuvre in translation of said mobile structure by the driving into rotation of said output pinion (3, 19), and
- to allow a rotation of said controlled element (16) with respect to said frame (C) when the torque thereof is higher than said limit torque, to avoid the application of a static or dynamic overload to said gear train (5).

2. Manoeuvring device according to claim 1, **characterized in that** the limit torque of the torque limiting means (18) is comprised between 0.1 and 3 times the nominal effort.

3. Manoeuvring device according to any one of claims 1 or 2, **characterized in that** the torque limiting means (18) include means for adjusting the limit torque during the manoeuvre.

4. Manoeuvring device according to any one of claims 1 to 3, **characterized in that** the torque limiting means (18) include means for piloting them to an inactive position, allowing a deactivation of said torque limiting means (18), in which the controlled element (16) is immobilized in rotation with respect to said frame (C).

5. Manoeuvring device according to any one of claims 1 to 4, **characterized in that** the torque limiting means (18) consist in a multi-disk brake.

6. Manoeuvring device according to any one of claims 1 to 5, **characterized in that** the torque limiting means (18) are associated with water cooling means.

7. Manoeuvring device according to any one of claims 1 to 6, **characterized in that** it includes a vertical rack (2) associated with an output pinion (3), and **in that** the gear train (5) includes two parallel groups (10, 15) in which:
- a first group (10), for driving said output pinion (3) into rotation, is driven directly by the motor means (4), and
- a second group (15) includes said controlled element (16) associated with said torque limiting means (18).

8. Manoeuvring device according to any one of claims 1 to 6, **characterized in that** it includes at least two output pinions (3, 19) that each mesh with one rack (2) and that extend along parallel axes, which output pinions (3, 19) are driven by motor means (4), through the gear train (5).

9. Manoeuvring device according to claim 8, **characterized in that** the gear train (5) includes two parallel groups (10, 15) each arranged for driving one of the two output pinions (3, 19), in which:
- a first group (10), for driving a first one of said output pinions (3) into rotation, is driven directly by the motor means (4), and
- a second group (15), for driving a second one of said output pinions (19) into rotation, is driven by said first group (10), which second group (15) includes said controlled element (16) associated with said torque limiting means (18).

10. Manoeuvring device according to claim 9, **characterized in that** said first group (10) and said second group (15) each comprise at least one epicyclic reducer (10a, 15a) consisted of a planetary gear (11, 16), a ring gear (13, 23) and satellite gears (12, 21), **in that** the planetary gear (16) of said second group (15) corresponds to the controlled element (16) associated with the torque limiting means (18), and **in that** the satellite gears (21) of this second group (15) are arranged so as to drive, directly or indirectly, the second output pinion (19).

11. Manoeuvring device according to claim 10, **characterized in that** the ring gears (13, 23) of the two parallel groups (10, 15) include means (24) for their rotational coupling.

12. Manoeuvring device according to any one of claims 10 or 11, **characterized in that** each parallel group (10, 15) include, downstream the epicyclic reducer (10a, 15a), two serial reducers:
- an epicyclic reducer (10b, 15b), consisted of a planetary gear (26), a ring gear (27) and satellite gears (28), and
- a toothed wheel (10c, 15c),
and **in that** said serial reducers (10b, 10c; 15b, 15c) are inverted on the two parallel groups (10, 15), with rotational coupling means (29) between the ring gear (27) of one epicyclic reducer (10b, 15b) of one of said parallel groups (10, 15) and the toothed wheel (10c, 15c) of the other parallel group (15).

13. Equipment for manoeuvring a mobile structure in lifting or lowering directions with respect to a support, which equipment comprises several devices (1) according to any one of claims 1 to 12, superimposed to each other.

14. Equipment according to claim 13, **characterized in that** it consists in an offshore unit (E) of the self-elevating type, wherein the mobile structure (J) is consisted by a leg and the fixed support (S) is consisted by a shell.

15. Equipment according to claim 14, **characterized in that** the frame (C) equips the fixed support (S).
